# EUROPEAN PATENT APPLICATION

(11) **EP 3 696 874 A1**
(43) Date of publication of application: **19.08.2020**
(21) Application number: 18865555.9
(22) Date of filing: 31.07.2018
(51) Int. Cl.: H01M 2/06, H01M 2/26, H01M 4/70, H01M 10/04, H01M 10/0587, B23K 101/38

(54) **SECONDARY BATTERY**

(30) Priority: 11.10.2017 KR 20170130172
(71) Applicant: Samsung SDI Co., Ltd., Yongin-si, Gyeonggi-do 17084 (KR)
(72) Inventor: JEONG, Hyun Ki, Yongin-si Gyeonggi-do 17084 (KR); LEE, Ho Jae, Yongin-si Gyeonggi-do 17084 (KR); PARK, Jung Hyun, Yongin-si Gyeonggi-do 17084 (KR); PARK, June Hyoung, Yongin-si Gyeonggi-do 17084 (KR); OYAGI, Nobuyuki, Yongin-si Gyeonggi-do 17084 (KR); LEE, Sang Mi, Yongin-si Gyeonggi-do 17084 (KR); LEE, Won Ik, Yongin-si Gyeonggi-do 17084 (KR); CHA, Ye Ji, Yongin-si Gyeonggi-do 17084 (KR)
(74) Representative: Shearman, James Ward
(86) International application number: PCT/KR2018/008711
(87) International publication number: WO 2019/074198

(57) **Abstract**

An embodiment of the present invention relates to a secondary battery, wherein a technical problem to be solved is to provide a secondary battery which has low resistance and can output high power without loss of capacity, and can prevent deformation or cracking of an electrode assembly. To this end, the present invention provides a secondary battery comprising: a cylindrical can; an electrode assembly which is received in the cylindrical can and includes multiple first tabs extending in a first direction which is a longitudinal direction of the cylindrical can, and multiple second tabs extending in a second direction opposite to the first direction; a cap assembly for sealing the cylindrical can; a first current collecting structure which electrically connects the multiple first tabs to the cap assembly while being insulated from the cylindrical can; and a second current collecting structure for electrically connecting the multiple second tabs to the cylindrical can.

## Description

### TECHNICAL FIELD

An embodiment of the present invention relates to a secondary battery.

### BACKGROUND ART

Lithium ion secondary batteries are being widely used in portable electronic devices and power sources of hybrid automobiles or electric vehicles because of various advantages, including a high operation voltage, a high energy density per unit weight, and so forth.

The secondary battery may be classified as a cylindrical type, a prismatic type, or a pouch type. Specifically, the cylindrical secondary battery generally includes a cylindrical electrode assembly, a cylindrical can coupled to the electrode assembly, an electrolyte injected into the can to allow movement of lithium ions, and a cap assembly coupled to one side of the can to prevent leakage of the electrolyte and to prevent separation of the electrode assembly.

The above information disclosed in this Background section is only for enhancement of understanding of the background of the described technology and therefore it may contain information that does not form the prior art that is already known in this country to a person of ordinary skill in the art.

### DESCRIPTION OF EMBODIMENTS

### TECHNICAL PROBLEM

An embodiment of the present invention provides a secondary battery which has low resistance and can output high power without loss of capacity, and can prevent deformation or cracking of an electrode assembly.

### SOLUTION TO PROBLEM

According to an aspect of the present invention, provided is a secondary battery comprising: a cylindrical can; an electrode assembly which is received in the cylindrical can and includes multiple first tabs extending in a first direction which is a longitudinal direction of the cylindrical can, and multiple second tabs extending in a second direction opposite to the first direction; a cap assembly for sealing the cylindrical can; a first current collecting structure which electrically connects the multiple first tabs to the cap assembly while being insulated from the cylindrical can; and a second current collecting structure for electrically connecting the multiple second tabs to the cylindrical can.

The first current collecting structure may include a conductive base member having a throughhole located at its central portion to allow the multiple first tabs to pass therethrough; and a conductive cover member coupled to the conductive base member and compressing the multiple first tabs.

The conductive cover member may be electrically connected to the cap assembly through a conductive lead tab.

The conductive base member may further include an insulating layer located on each of surfaces facing the electrode assembly and the can.

The conductive cover member may include a cover member throughhole connected to the throughhole of the conductive base member.

The conductive cover member, the multiple first tabs and the conductive base member, may be welded to one another.

The second current collecting structure may include: a conductive base member having a throughhole located at its central portion to allow the multiple second tabs to pass therethrough; and a conductive cover member coupled to the conductive base member and compressing the multiple second tabs.

The conductive cover member may be directly welded to the bottom surface of the can.

The conductive base member may further include an insulating layer located on a surface facing the electrode assembly.

The conductive base member, the multiple second tabs and the conductive cover member, may be welded to one another.

### ADVANTAGEOUS EFFECTS OF INVENTION

As described above, an embodiment of the present invention provides a secondary battery which has low resistance and can output high power without a loss of capacity, and can prevent deformation or cracking of an electrode assembly.

That is to say, in an embodiment, the secondary battery may have low resistance and can output high power by drawing multiple tabs (or multi-tabs) from the electrode assembly and electrically connecting the multiple tabs to a cap assembly and/or a cylindrical can through a large-area current collecting structure.

In addition, in the secondary battery according to an embodiment, since the electrode assembly includes a tab obtained by a base material punching method, there would be no loss in the overall battery capacity, unlike in the conventional secondary battery in which a separate tab is prepared, an active material layer is removed from a region of an electrode plate, and the separate tab is welded to the region, which reduces the amount of the active material layer, thereby unavoidably lowering the battery capacity.

Additionally, in an embodiment, since the electrode assembly includes tabs formed by a base material punching method, deformation or cracking of the electrode assembly can be prevented, in spite of volumetric expansion or shrinkage of the electrode assembly during charging and discharging of the secondary battery. That is to say, since the tabs formed by the base material punching method does not degrade the degree of circularity (i.e., a roundness that shows how close the shape of the electrode assembly to a true circle) of the electrode assembly, the electrode assembly may not be deformed or cracked in spite of repeated charging and discharging cycles of the secondary battery.

### BRIEF DESCRIPTION OF DRAWINGS

FIGS. 1A, 1B and 1C are a perspective view, a cross-sectional view and an exploded perspective view of a secondary battery according to an embodiment of the present invention.
FIGS. 2A to 2E are cross-sectional views illustrating various shapes of a first current collecting structure of the secondary battery according to an embodiment of the present invention.
FIGS. 3A to 3E are cross-sectional views illustrating various example shapes of a second current collecting structure of the secondary battery according to an embodiment of the present invention.
FIGS. 4A to 4D are schematic views illustrating a method for connecting first and second current collecting structures to an electrode assembly of the secondary battery according to an embodiment of the present invention.
FIGS. 5A to 5C are schematic views illustrating a method for connecting a first current collecting structure to an electrode assembly of the secondary battery according to an embodiment of the present invention.

### BEST MODE

Hereinafter, a preferred embodiment of the present invention will be described in detail.

Various embodiments of the present invention may be embodied in many different forms and should not be construed as being limited to the example embodiments set forth herein. Rather, these example embodiments of the invention are provided so that this invention will be thorough and complete and will convey inventive concepts of the invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present and the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "on" or "above" the other elements or features. Thus, the exemplary term "below" can encompass both an orientation of above and below.

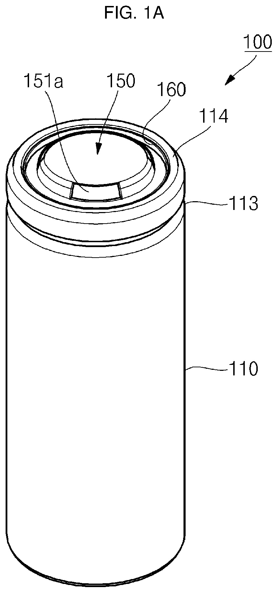

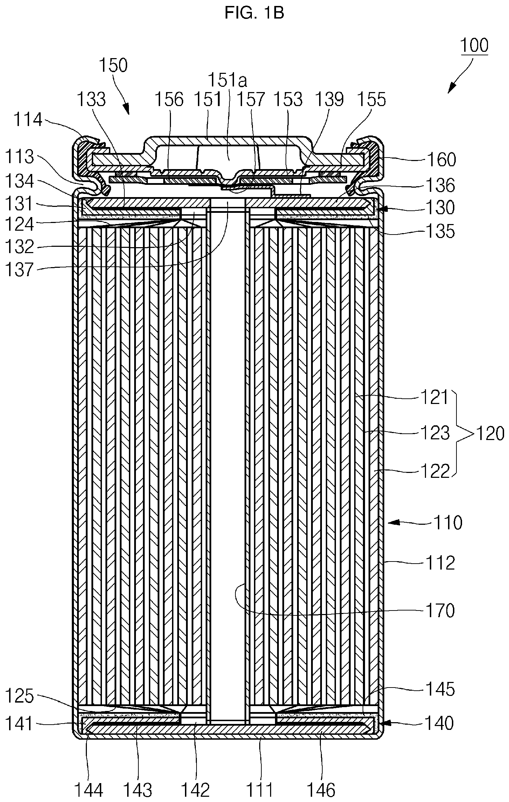

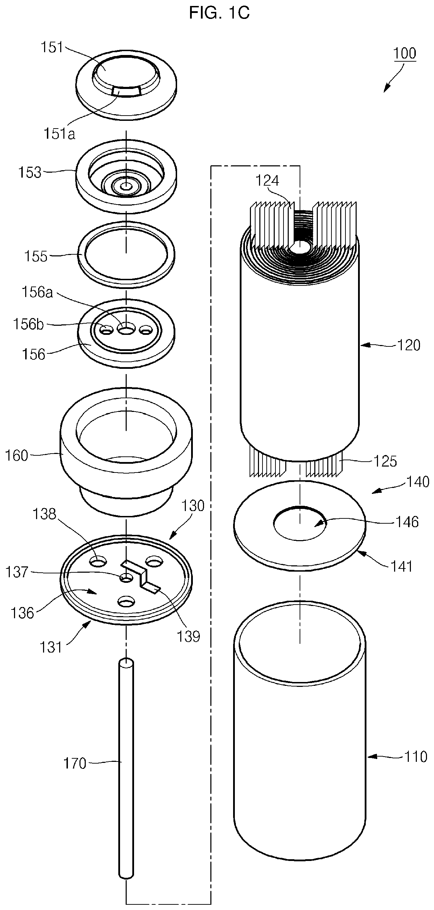

FIGS. 1A, 1B and 1C are a perspective view, a cross-sectional view and an exploded perspective view of a secondary battery according to an embodiment of the present invention.

As illustrated in FIGS. 1A, 1B and 1C, the secondary battery 100 according to an embodiment includes a cylindrical can 110, a cylindrical electrode assembly 120, a first current collecting structure 130, a second current collecting structure 140, and a cap assembly 150.

In addition, the secondary battery 100 according to the present invention may further include an insulating gasket 160 insulating the cylindrical can 110 and the cap assembly 150 from each other, and a center pin 170 coupled to the electrode assembly 120.

The cylindrical can 110 includes a substantially circular bottom portion 111, and side portion 112 extending upward by a given length from the bottom portion 111. During the manufacture of a secondary battery, a top portion of the cylindrical can 110 is in an open state. Therefore, during assembling of the secondary battery, the electrode assembly 120, the first current collecting structure 130 and the second current collecting structure 140 may be integrated as a single structure to then be inserted into the cylindrical can 110. Thereafter, an electrolyte may be additionally injected into the cylindrical can 110.

The cylindrical can 110 may be made of steel, a steel alloy, nickel plated steel, a nickel plated steel alloy, aluminum, an aluminum alloy, or an equivalent thereof, but aspects of the present invention are not limited thereto. In addition, in order to prevent separation of the cap assembly 150, the cylindrical can 110 may include a beading part 113 recessed inward at its lower portion and a crimping part 114 recessed inward at its upper portion.

The cylindrical electrode assembly 120 is received in the cylindrical can 110. The electrode assembly 120 includes a first electrode plate 121 coated with a first electrode active material (e.g., a cathode active material such as a transition metal oxide (LiCoO₂, LiNiO₂, or LiMn₂O₄)), a second electrode plate 122 coated with a second electrode active material (e.g., an anode active material such as graphite, carbon or silicon), and a separator 123 positioned between the first electrode plate 121 and the second electrode plate 122 and allowing only lithium ions to move therebetween while preventing an electrical short circuit therebetween. The first electrode plate 121, the second electrode plate 122 and the separator 123 are stacked and then wound in a substantially cylindrical configuration. For example, the first electrode plate 121 may include an aluminum (Al) foil, and the second electrode plate 122 may include a copper (Cu) or nickel (Ni) foil, but aspects of the present invention are not limited thereto. In addition, examples of the separator 123 may include, but not limited to, a polyethylene separator (PES), a polypropylene separator (PPS), a ceramic coated separator (CCS), a polymer coated separator (PCS), a multi-layer coated separator (MCS), or a multi-functional separator (MFS).

Meanwhile, the first electrode plate 121 includes multiple first tabs 124 (i.e., cathode base material punched tabs or cathode multi-tabs) protruding and extending upward by a predetermined length, and the second electrode plate 122 includes multiple second tabs 125 (i.e., anode base material punched tabs or anode multi-tabs) protruding and extending upward by a predetermined length. Here, the protruding and extending directions of the first tabs 124 and the second tabs 125 may be the same as those of the cylindrical can 110 and/or the cylindrical electrode assembly 120. When the protruding and extending direction of the first tabs 124 is defined as a first direction, the protruding and extending direction of the second tabs 125 may be defined as a second direction.

In such a manner, the multiple first tabs 124 and the multiple second tabs 125 are provided in the electrode assembly 120, thereby providing a secondary battery enabling low resistance and high output power without a loss of battery capacity. In addition, since the multiple first and second tabs 124 and 125 are provided in a base-material-punched manner, deformation (i.e., degradation in the degree of circularity) or cracking of the electrode assembly 120 can be prevented.

In addition, the first tabs 124 may be made of aluminum, and the second tabs 125 may be made of copper or nickel, but aspects of the present invention are not limited thereto.

In addition, the first tabs 124 of the electrode assembly 120 are electrically connected to the first current collecting structure 130 to be described below, and the second tabs 125 of the electrode assembly 120 are electrically connected to the second current collecting structure 140 to be described below. Additionally, the first current collecting structure 130 is electrically connected to the cap assembly 150, and the second current collecting structure 140 is electrically connected to the cylindrical can 110. Therefore, the cap assembly 150 may operate as a cathode, and the cylindrical can 110 may operate as an anode. Of course, the connection relationships thereof may be reversed, and the cap assembly 150 may operate as an anode, and the cylindrical can 110 may operate as a cathode.

The first current collecting structure 130 is insulated from the cylindrical can 110 and electrically connect the multiple first tabs 124 provided in the electrode assembly 120 to the cap assembly 150.

The first current collecting structure 130 includes a conductive base member 131 and a conductive cover member 136.

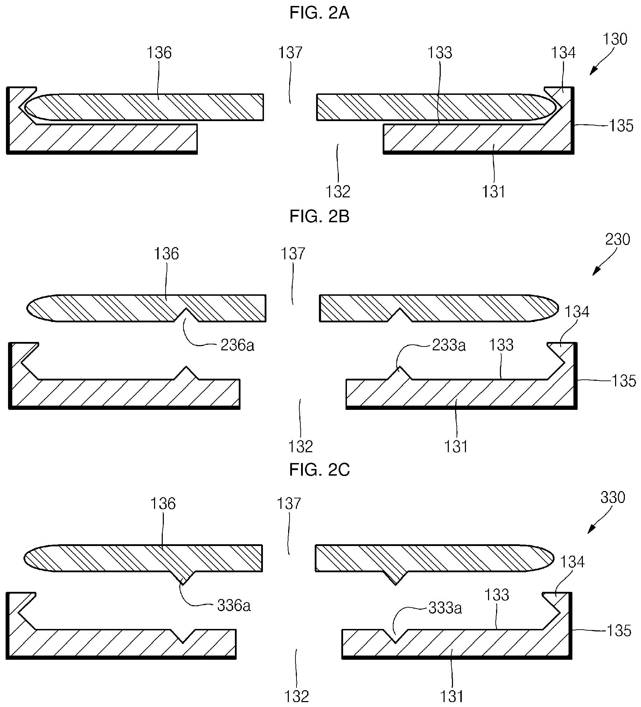

The conductive base member 131 includes a throughhole 132 formed at its central portion to allow the multiple first tabs 124 to pass therethrough, a mounting surface 133 formed to be substantially planar to allow the multiple first tabs 124 bent to the exterior side of the throughhole 132 to be mounted thereon, and a sidewall 134 upwardly protruding/extending along the circumference of the mounting surface 133. In addition, the conductive base member 131 may include an insulating layer 135 (i.e., polyimide, polypropylene, polyethylene, a metal oxide layer, etc.) formed on each of surfaces (bottom and side surfaces) facing the electrode assembly 120 and the cylindrical can 110 (see FIG. 2A).

Practically, the insulating layer 135 prevents the second electrode plate 122 of the electrode assembly 120 from being electrically shorted to the conductive base member 131, and prevents the conductive base member 131 from being electrically shorted to the cylindrical can 110.

The conductive cover member 136 is coupled to the conductive base member 131 and presses the multiple first tabs 124 against the conductive base member 131. That is to say, the conductive cover member 136 is shaped of a substantially circular disk or a circular plate and is coupled to a space defined by the mounting surface 133 and the sidewall 134 provided on the conductive base member 131 to allow the multiple first tabs 124 bent from the throughhole 132 to be pressed against the planar mounting surface 133.

In addition, the conductive cover member 136, the multiple first tabs 124 and the conductive base member 131 may be welded to one another by, for example, laser welding, ultrasonic welding or resistance welding. Also, the conductive cover member 136 may further include a throughhole 137 connected to the throughhole 132 of the conductive base member 131.

When a large amount of internal gas is generated in the secondary battery, the throughhole 132 of the conductive base member 131 and the throughhole 137 of the conductive cover member 136 allows the internal gas to be rapidly transferred to the cap assembly 150.

In addition to the centrally positioned throughholes 132 and 137, multiple sub throughholes 138 (see FIG. 1C) passing through the conductive cover member 136 and the conductive base member 131 may further be provided at exterior sides of the throughholes 132 and 137. The multiple sub throughholes 138 allow an electrolyte to rapidly flow into the electrode assembly 120 during an electrolyte injecting process. Here, the sub throughholes 138 also allow the smoke generated in the electrode assembly 120 to rapidly move toward the cap assembly 150.

The conductive base member 131 and the conductive cover member 136 may include aluminum, an aluminum alloy, nickel, a nickel alloy, copper, or a copper alloy.

When the conductive base member 131 is made of an aluminum based material, the insulating layer 135 may be an anodizing layer, for example, an oxidative coating or an oxidative aluminum layer (Al₂O₃). In addition, the insulating layer 135 (e.g., an anodizing layer) may be formed on the surface of the conductive cover member 136, as necessary. The insulating layer 135 may have a thickness of, for example, but not limited to, about 25 *µ*m to about 100 *µ*m, thereby maximizing the capacity of the electrode assembly 120. For reference, the conventional insulating layer has a thickness in a range of 1 mm to 30 mm, and thus the electrode assembly 120 using the conventional insulating layer may have a reduced capacity according to the increased thickness.

In addition, the conductive cover member 136 may be electrically connected to the cap assembly 150 through a lid tab 139. That is to say, a bottom end of the lid tab 139 may be welded to the conductive cover member 136 and a top end thereof may be welded to the cap assembly 150.

The second current collecting structure 140 electrically connects the multiple second tabs 125 provided in the electrode assembly 120 to the bottom portion 111 of the cylindrical can 110.

The second current collecting structure 140 also includes a conductive base member 141 and a conductive cover member 146.

The conductive base member 141 includes a throughhole 142 formed at its central portion to allow the multiple first tabs 125 to pass therethrough, a mounting surface 143 formed to be substantially planar to allow the multiple first tabs 125 bent to the exterior side of the throughhole 142 to be mounted thereon, and a sidewall 144 upwardly protruding/extending along the circumference of the mounting surface 143. In addition, the conductive base member 141 may include an insulating layer 145 (i.e., polyimide, polypropylene, polyethylene, a metal oxide layer, etc.) formed on each of surfaces facing the electrode assembly 120 and the cylindrical can 110. Practically, the insulating layer 145 prevents the second electrode plate 121 of the electrode assembly 120 from being electrically shorted to the conductive base member 141, and prevents the conductive base member 141 from being electrically shorted to the cylindrical can 110. The insulating layer 145 may have a thickness of, for example, but not limited to, about 25 *µ*m to about 100 *µ*m, thereby maximizing the capacity of the electrode assembly 120.

In some cases, the insulating layer 145 may not be formed on the cylindrical can 110 of the conductive base member 141, that is, on an area facing the side portion 112 of the cylindrical can 110.

The conductive cover member 146 is coupled to the conductive base member 141 and presses the multiple second tabs 125 against the conductive base member 141. That is to say, the conductive cover member 146 is shaped of a substantially circular disk or a circular plate and is coupled to a space defined by the mounting surface 143 and the sidewall 144 provided on the conductive base member 141 to allow the multiple second tabs 125 bent from the throughhole 142 to be pressed against the planar mounting surface 143. In addition, the conductive cover member 146, the multiple first tabs 125 and the conductive base member 141 may be welded to one another by, for example, laser welding, ultrasonic welding or resistance welding.

Also, the conductive cover member 146 may be directly welded to the bottom portion 111 of the cylindrical can 110 by, for example, laser welding, ultrasonic welding or resistance welding.

The conductive base member 141 and the conductive cover member 146 may include aluminum, an aluminum alloy, nickel, a nickel alloy, copper, or a copper alloy. When the conductive base member 141 is made of an aluminum based material, the insulating layer 145 may be an anodizing layer.

The cap assembly 150 may include a cap-up 151 having a plurality of throughholes 151a, a safety plate 153 installed under the cap-up 151, a connection ring 155 installed under the safety plate 153, a cap-down 156 coupled to the connection ring 155 and having first and second throughholes 156a and 156b, and a sub plate 157 fixed to a bottom surface of the cap-down 156 and electrically connected to the lid tab 139.

The throughholes 151a formed in the cap-up 151 and the throughholes 156b formed in the cap-down 156 may discharge the internal gas to the outside when an internal pressure of the cylindrical can 110 increases due to abnormality such as overcharge. The internal pressure makes the safety plate 153 upwardly inverted and electrically disconnected from the sub plate 157. Then, the safety plate 153 is ruptured and the internal gas is discharged to the outside.

The insulating gasket 160 covers the cap-up 151, the safety plate 153, the connection ring 155 and the cap-down 156 in a substantially circular ring shape, and thus electrically insulates these elements sequentially in that order from the side portion 112 of the cylindrical can 110. The insulating gasket 160 is configured to be compressed substantially between the beading part 113 and the crimping part 114, which are formed on the side portion 112 of the cylindrical can 110. The insulating gasket 160 may include, for example, a heat-resistant resin, but aspects of the present invention are not limited thereto. The heat-resistant resin may include, for example, two or more selected from the group consisting of polypropylene (PP), polyethylene (PE), polyimide (PI), polybutyleneterephthalate (PBT), polycarbonate (PC), and polystyrene (PS), but aspects of the present invention are not limited thereto.

The center pin 170 is shaped of a hollow cylindrical pipe and is coupled to a substantially central portion of the electrode assembly 120. The center pin 170 may be made of steel, a steel alloy, nickel plated steel, a nickel plated steel alloy, aluminum, an aluminum alloy, or polybutyleneterephthalate an equivalent thereof, but aspects of the present invention are not limited thereto.

The top end of the center pin 170 may electrically contact the conductive base member 131 of the first current collecting structure 130 and the bottom end thereof may electrically contact the conductive base member 141 of the second current collecting structure 140. To prevent the center pin 170 from making the first current collecting structure 130 and the second current collecting structure 140 electrically contact each other, an insulating layer may further be formed on each of the top and bottom ends of the center pin 170. The center pin 170 may suppress deformation of the electrode assembly 120 during charging and discharging and may serve as a movement path of the gas generated inside the secondary battery 100. In some cases, the center pin 170 may not be installed.

In addition, an electrolyte (not shown) is injected into the cylindrical can 110 and allows movement of lithium ions generated by an electrochemical reaction in the first electrode plate 121 and the second electrode plate 122 during charging and discharging of the battery. The electrolyte may be a nonaqueous organic electrolyte including a mixture of a lithium salt and high-purity organic solvent. In addition, the electrolyte may be a polymer using a solid electrolyte, but aspects of the present invention are not limited thereto.

In such a manner, according to the embodiment of the present invention, the first tabs 124 and the second tabs 125 of the electrode assembly 120, such as multiple base material punched tabs, are electrically connected to the first and second current collecting structures 130 and 140, each including conductive base members 131 and 141 and conductive cover members 136 and 146, respectively, thereby providing the secondary battery 100 enabling low resistance and high output power without a loss of battery capacity.

In addition, since tabs are provided by punching base materials of electrode plates, instead of separately providing tabs and welding the separately provided tabs to electrode plates, the secondary battery 100 including the electrode assembly 120 without deformation or cracking may be provided.

In order to increase the capacity of a secondary battery, there have recently been attempts to add high-concentration silicon to an active material of an anode plate. In such cases, however, the anode plate may undergo a volumetric expansion ratio of about 25% during charging and discharging of the secondary battery. In this regard, according to an embodiment, the multiple first and second tabs 124 and 125 and the first and second current collecting structures 130 and 140 are employed to the electrode assembly 120 having such a high expansion ratio, thereby considerably improving the safety of the secondary battery 100.

FIGS. 2A to 2E are cross-sectional views illustrating various shapes of the first current collecting structure 130 of the secondary battery 100 according to an embodiment of the present invention.

As illustrated in FIG. 2A, the first current collecting structure 130 includes a conductive base member 131 having a throughhole 132 formed at its central portion to allow the multiple first tabs 124 to pass therethrough, and a conductive cover member 136 coupled to the top portion of the conductive base member 131 to allow the multiple first tabs 124 to be pressed against the conductive base member 131 and having a throughhole 137 formed at its central portion.

Here, the throughhole 137 of the conductive cover member 136 has a smaller diameter than the throughhole 132 of the conductive base member 131, and thus the center pin 170 may contact the conductive cover member 136 after the top end of the center pin 170 passes through the throughhole 137 of the conductive cover member 136.

The conductive base member 131 further includes insulating layers 135 formed on the bottom and side surfaces thereof. In addition, the conductive base member 131 further includes the mounting surface 133 formed to allow the conductive cover member 136 to be mounted thereon, and the sidewall 134 upwardly extending along the circumference of the mounting surface 133. The inner surface of the sidewall 134 is configured such that it has a relatively large diameter at its central portion and a relatively small diameter at its top and bottom portions. With this configuration, once the conductive cover member 136 is engaged with the inner surface of the sidewall 134, the conductive cover member 136 is hardly disengaged from the sidewall 134. This configuration is favorable during manufacture of a secondary battery. That is to say, even when an external shock is applied to the first current collecting structure 130 in a state in which the first tabs 124 are inserted between the conductive base member 131 and the conductive cover member 136 and then pressed, the conductive base member 131 and the conductive cover member 136 are not separated from each other. Accordingly, for example, the electrode assembly 120 and the first current collecting structure 130 maintain a stable single structure until the first current collecting structure 130 is subjected to a welding process, thereby allowing various transfer modes and easy management.

The conductive cover member 136 may be shaped of a circular disk or a circular plate having substantially planar top and bottom surfaces. In particular, the circumferential surface of the conductive cover member 136 has a relatively large diameter at its central portion and a relatively small diameter at its top and bottom portions. Therefore, once the conductive cover member 136 is engaged with the sidewall 134 of the conductive base member 131 positioned thereunder, the conductive cover member 136 and the conductive base member 131 are hardly disengaged from each other.

As illustrated in FIG. 2B, in the first current collecting structure 230, the conductive base member 131 may further include a protrusion 233a (i.e., a triangular protrusion) upwardly protruding on the mounting surface 133, and the conductive cover member 136 may further include a recess 236a (i.e., a triangular recess) to allow the protrusion 233a to be coupled to its bottom surface.

Therefore, the protrusion 233a of the conductive base member 131 and the recess 236a of the conductive cover member 136 may additionally compress/fix the first tabs 124, and thus coupling forces between the first current collecting structure 120 and the first tabs 124 can be further increased.

As illustrated in FIG. 2C, in the first current collecting structure 330, the conductive base member 131 may further include a recess 333a (i.e., triangular recess) downwardly recessed from the mounting surface 133, and a protrusion 336a (i.e., a triangular protrusion) formed to be engaged with the recess 333a on the bottom surface of the conductive cover member 136.

Therefore, the recess 333a of the conductive base member 131 and the protrusion 336a of the conductive cover member 136 may additionally compress/fix the first tabs 124, and thus coupling forces between the first current collecting structure 330 and the first tabs 124 can be further increased.

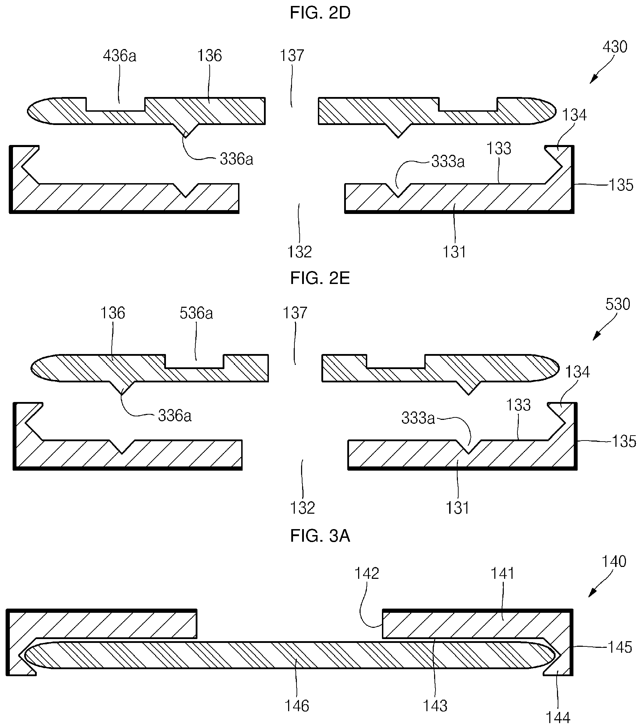

As illustrated in FIG. 2D, in the first current collecting structure 430, the conductive cover member 136 may further include a recess 436a (i.e., a rectangular recess) formed on its top surface for laser welding. That is to say, the recess 436a, which makes the conductive cover member 136 relatively thinner, is further formed on the top surface of the conductive cover member 136, corresponding to the exterior side of the protrusion 336a, so that the conductive cover member 136 is rapidly melted during laser welding, thereby welding the conductive cover member 136 to the first tabs 124 and the conductive base member 131.

As illustrated in FIG. 2E, in the first current collecting structure 530, the conductive cover member 136 may further include a recess 536a (i.e., a rectangular recess) formed on its top surface for laser welding. That is to say, the recess 536a, which makes the conductive cover member 136 relatively thinner, is further formed on the top surface of the conductive cover member 136, corresponding to the exterior side of the protrusion 336a, so that the conductive cover member 136 is rapidly melted during laser welding, thereby welding the conductive cover member 136 to the first tabs 124 and the conductive base member 131.

FIGS. 3A to 3E are cross-sectional views illustrating various example shapes of the second current collecting structure 140 of the secondary battery 100 according to an embodiment of the present invention.

FIGS. 3A to 3E are cross-sectional views illustrating various shapes of the second current collecting structure 140 of the secondary battery 100 according to an embodiment of the present invention.

As illustrated in FIG. 3A, the second current collecting structure 140 includes a conductive base member 141 having a throughhole 142 formed at its central portion to allow the multiple second tabs 125 to pass therethrough, and a conductive cover member 146 coupled to the bottom portion of the conductive base member 141 to allow the multiple second tabs 125 to be pressed against the conductive base member 141.

Here, since a throughhole is not formed in the conductive cover member 146, the bottom end of the center pin 170 may be stably positioned on the conductive cover member 146 and the conductive cover member 146 may be easily welded to the bottom portion 111 of the cylindrical can 110 by means of a welding tool in a subsequent process.

The conductive base member 141 further includes an insulating layer 145 formed on each of top and side surfaces thereof. In addition, the conductive base member 141 may further include a mounting surface 143 formed on the bottom surface to allow the conductive cover member 146 to be mounted thereon, and a sidewall 144 downwardly extending along the circumference of the mounting surface 143. In addition, the inner surface of the sidewall 144 is configured such that it has a relatively large diameter at its central portion and a relatively small diameter at its top and bottom portions. With this configuration, once the conductive cover member 146 is engaged with the inner surface of the sidewall 144, the conductive cover member 146 is hardly disengaged from the sidewall 144. This configuration is favorable during manufacture of a secondary battery. That is to say, even when an external shock is applied to the second current collecting structure 140 in a state in which the second tabs 125 are inserted between the conductive base member 141 and the conductive cover member 146 and then compressed, the conductive base member 141 and the conductive cover member 146 are not separated from each other. Accordingly, for example, the electrode assembly 120 and the second current collecting structure 140 maintain a stable single structure until the second current collecting structure 140 is subjected to a welding process, thereby allowing various transfer modes and easy management.

The conductive cover member 146 may be shaped of a circular disk or a circular plate having substantially planar top and bottom surfaces. In particular, the circumferential surface of the conductive cover member 146 has a relatively large diameter at its central portion and a relatively small diameter at its top and bottom portions. Therefore, once the conductive cover member 146 is engaged with the sidewall 144 of the conductive base member 141 positioned thereunder, the conductive cover member 146 and the conductive base member 141 are hardly disengaged from each other.

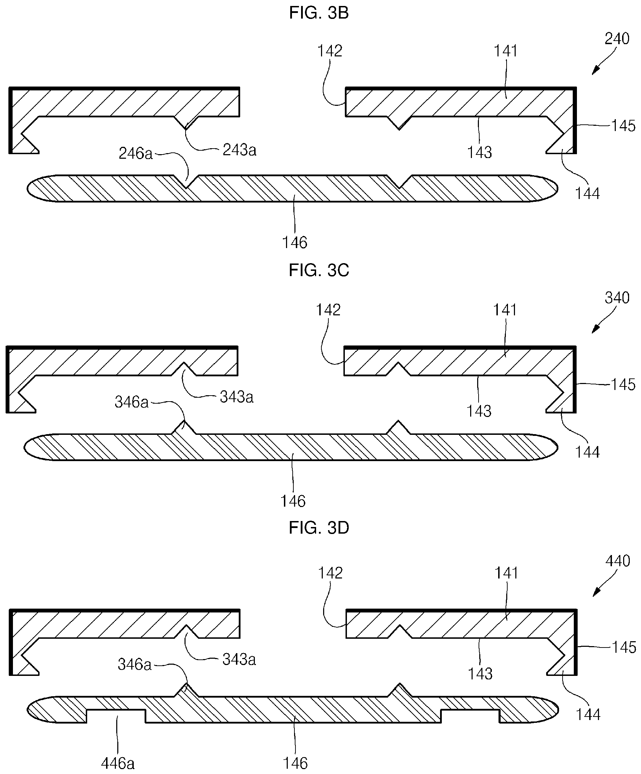

As illustrated in FIG. 3B, the conductive base member 141 in a second current collecting structure 240 may further include protrusion 243a (i.e., a triangular protrusion) downwardly protruding on the mounting surface 143, and the conductive cover member 146 may include a recess 246a (i.e., a triangular recess) formed on its top surface to be engaged with the protrusion 243a.

Therefore, the protrusion 243a of the conductive base member 141 and the recess 246a of the conductive cover member 146 may additionally compress/fix the second tabs 125, and thus coupling forces between the second current collecting structure 240 and the second tabs 125 can be further increased.

As illustrated in FIG. 3C, the conductive base member 141 in a second current collecting structure 340 may further include a recess 343a (i.e., a triangular recess) upwardly formed on the mounting surface 143, and the conductive cover member 146 may include a protrusion 346a (i.e., triangular protrusion) formed on its top surface to be coupled to the recess 343a.

Therefore, the recess 343a of the conductive base member 141 and the protrusion 346a of the conductive cover member 146 may additionally compress/fix the second tabs 125, and thus coupling forces between the second current collecting structure 340 and the second tabs 125 can be further increased.

As illustrated in FIG. 3D, the conductive cover member 146 in a second current collecting structure 440 may further include a recess 446a (i.e., rectangular recess) formed on its bottom surface for laser welding. That is to say, the recess 446a, which makes the conductive cover member 146 relatively thinner, is further formed on the bottom surface of the conductive cover member 146, corresponding to the exterior side of the protrusion 346a, so that the conductive cover member 146 is rapidly melted during laser welding, thereby welding the conductive cover member 146 to the second tabs 125 and the conductive base member 141.

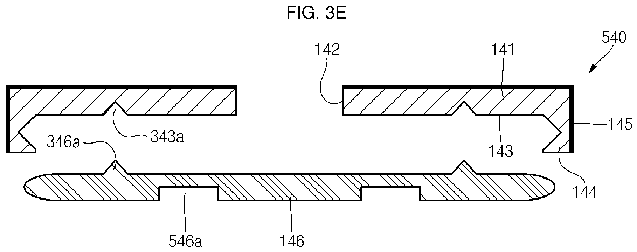

As illustrated in FIG. 3E, the conductive cover member 146 in a second current collecting structure 540 may further include a recess 546a (i.e., rectangular recess) formed on its bottom surface for laser welding. That is to say, the recess 546a, which makes the conductive cover member 146 relatively thinner, is further formed on the bottom surface of the conductive cover member 146, corresponding to the interior side of the protrusion 346a, so that the conductive cover member 146 is rapidly melted during laser welding, thereby welding the conductive cover member 146 to the second tabs 125 and the conductive base member 141.

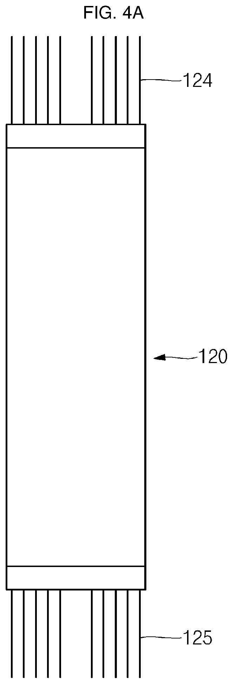

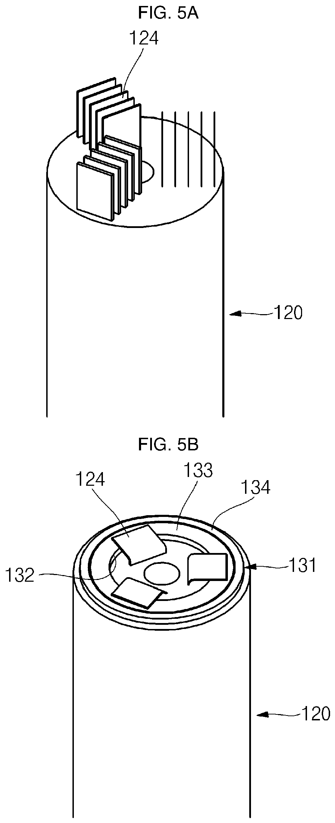

FIGS. 4A to 4D are schematic views illustrating a method for connecting the first and second current collecting structures 130 and 140 to the electrode assembly 120 of the secondary battery 100 according to an embodiment of the present invention. In addition, FIGS. 5A to 5C are schematic views illustrating a method for connecting the first current collecting structure 130 to the electrode assembly 120 of the secondary battery 100 according to an embodiment of the present invention.

As illustrated in FIGS. 4A and 5A, the electrode assembly 120 includes multiple first tabs 124 extending in a first direction (i.e., in an upward direction). In addition, as illustrated in FIG. 4A, the electrode assembly 120 includes multiple second tabs 125 extending in a second direction opposite to the first direction (i.e., in a downward direction).

Here, the first tabs 124 and/or the second tabs 125 may be formed in two arrays, or may be formed in three or four arrays, as illustrated in FIG. 5A. As the number of tabs increases, the resistance may have reduced resistance, thus enabling high power output. Accordingly, the number of tabs may be determined according to a predetermined design standard.

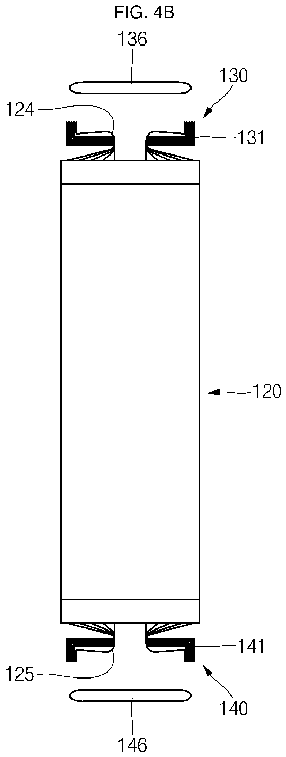

As illustrated in FIGS. 4B and 5B, the first tabs 124 are engaged with the throughholes 132 of the conductive base member 131 in the first current collecting structure 130, and the first tabs 124 are then bent to be mounted on the mounting surface 133 of the conductive base member 131. In addition, as illustrated in FIG. 4B, the second tabs 125 are engaged with the throughholes 142 of the conductive base member 141 in the second current collecting structure 140, and the second tabs 125 are then bent to be mounted on the mounting surface 143 of the conductive base member 141.

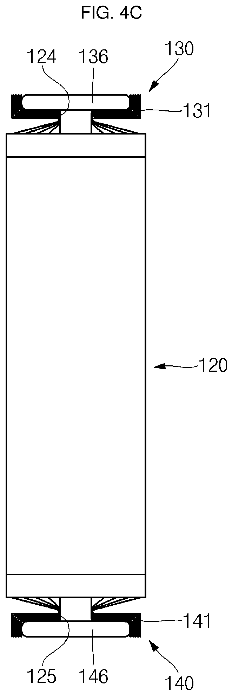

As illustrated in FIG. 4C, the conductive cover member 136 in the first current collecting structure 130 is coupled to the conductive base member 131 to then cover the first tabs 124. In addition, as illustrated in FIG. 4C, in the second current collecting structure 140, the conductive cover member 146 is coupled to the conductive base member 141 to then cover the second tabs 125.

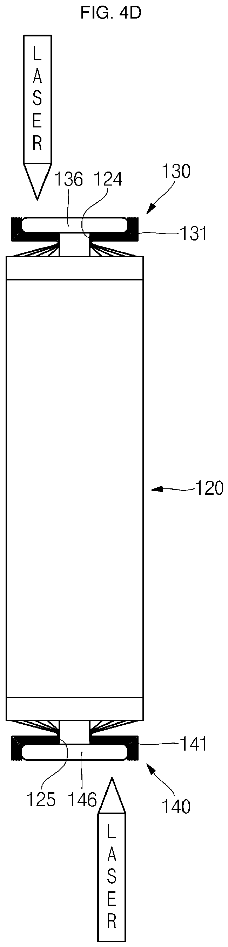

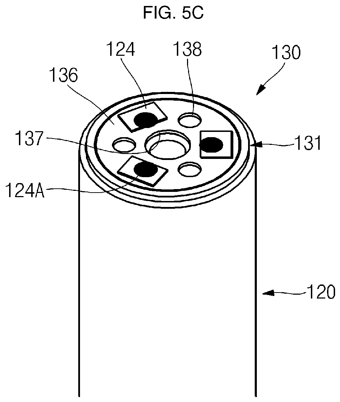

As illustrated in FIGS. 4D and 5C, laser beam is irradiated to the conductive cover member 136 in the first current collecting structure 130, and some regions of the conductive cover member 136 are then melted and welded to the first tabs 124 and the conductive base member 131 at welding spots 124A. In addition, as illustrated in FIG. 4D, in the second current collecting structure 140, the conductive cover member 146 is subjected to laser beam irradiation, so that some regions of the conductive cover member 146 are melted to be welded to the second tabs 125 and conductive base member 141.

As described above, according to an embodiment, the first current collecting structure 130 is configured to easily receive the multiple first tabs 124, and the second current collecting structure 140 is configured to easily receive the multiple second tabs 125. That is to say, in a case where the multiple first tabs 124 is formed in the electrode assembly 120, it is quite difficult to electrically connect these elements to the cap assembly 150 without a failure. Likewise, in a case where the multiple second tabs 125 is formed in the electrode assembly 120, it is also quite difficult to electrically connect these elements to the bottom portion 111 of the cap assembly 150 without a failure.

In some embodiments of the present disclosure, however, provided are the first current collecting structure 130 and the second current collecting structure 140 each including a compressive structure. Thus, the multiple first tabs 124 can be fitted into and be compressed within the compressive structure of the first current collecting structure 130, and the multiple second tabs 125 can be fitted into and be compressed within the compressive structure of the second current collecting structure 140, thereby easily electrically connect the multiple first tabs 124 and the second tabs 125 to the cap assembly 150 and the cylindrical can 110.

In addition, in the secondary battery according to the embodiment, the insulating layers 135 and 145 are formed on the bottom and side surfaces of the first current collecting structure 130 and on the top and side surfaces of the second current collecting structure 140, respectively, and thus separate insulating plates are not required, unlike in the conventional secondary battery. That is to say, in some embodiments, the first and second current collecting structures 130 and 140 function not only as insulators but also as current collectors, thereby reducing the number of components required for the secondary battery 100.

Although the foregoing embodiments have been described to practice the secondary battery of the present invention, these embodiments are set forth for illustrative purposes and do not serve to limit the invention. Those skilled in the art will readily appreciate that many modifications and variations can be made, without departing from the spirit and scope of the invention as defined in the appended claims, and such modifications and variations are encompassed within the scope and spirit of the present invention.

## Claims

1. A secondary battery comprising:
a cylindrical can;
an electrode assembly which is received in the cylindrical can and includes multiple first tabs extending in a first direction which is a longitudinal direction of the cylindrical can, and multiple second tabs extending in a second direction opposite to the first direction;
a cap assembly for sealing the cylindrical can;
a first current collecting structure which electrically connects the multiple first tabs to the cap assembly while being insulated from the cylindrical can; and
a second current collecting structure for electrically connecting the multiple second tabs to the cylindrical can.

2. The secondary battery of claim 1, wherein the first current collecting structure comprises:
a conductive base member having a throughhole located at its central portion to allow the multiple first tabs to pass therethrough; and
a conductive cover member coupled to the conductive base member and compressing the multiple first tabs.

3. The secondary battery of claim 2, wherein the conductive cover member is electrically connected to the cap assembly through a conductive lead tab.

4. The secondary battery of claim 2, wherein the conductive base member further comprises an insulating layer located on each of surfaces facing the electrode assembly and the can.

5. The secondary battery of claim 2, wherein the conductive cover member comprises a cover member throughhole connected to the throughhole of the conductive base member.

6. The secondary battery of claim 2, wherein the conductive cover member, the multiple first tabs and the conductive base member, are welded to one another.

7. The secondary battery of claim 1, wherein the second current collecting structure comprises:
a conductive base member having a throughhole located at its central portion to allow the multiple second tabs to pass therethrough; and
a conductive cover member coupled to the conductive base member and compressing the multiple second tabs.

8. The secondary battery of claim 7, wherein the conductive cover member is directly welded to the bottom surface of the can.

9. The secondary battery of claim 7, wherein the conductive base member further comprises an insulating layer located on a surface facing the electrode assembly.

10. The secondary battery of claim 7, wherein the conductive base member, the multiple second tabs and the conductive cover member, are welded to one another.
